# EUROPEAN PATENT APPLICATION

(11) **EP 3 499 958 A1**
(43) Date of publication of application: **19.06.2019**
(21) Application number: 17207996.4
(22) Date of filing: 18.12.2017
(51) Int. Cl.: H04W 36/00, H04W 48/14

(54) **A METHOD OF, AND DEVICES FOR, A USER TERMINAL TO SELECT A NETWORK TO BE USED AS A VISITED NETWORK IN A TELECOMMUNICATION NETWORK**

(71) Applicant: Koninklijke KPN N.V., 3072 AP Rotterdam (NL)
(72) Inventor: Pronk, Ewout Leonard, 2718 KL Zoetermeer (NL)
(74) Representative: Wuyts, Koenraad Maria

(57) **Abstract**

A method for a user terminal to select a network in a telecommunication network, wherein the user terminal is registered with a home network, wherein the method comprises the steps of detecting available networks thereby obtaining a listing of identifiers of available networks for the user terminal, transmitting the listing of identifiers to the home network, receiving, from the home network, at least one identifier present in the listing, thereby indicating the corresponding at least one network which the user terminal is allowed to use, selecting a network based on the received at least one identifier.

## Description

### Technical field

The present disclosure is generally related to roaming. More specifically, the present disclosure is directed to a user terminal that needs to select a particular network as a visited network in a telecommunication network.

### Background

Steering of roaming is a well known term in the art and is considered to be the process by which a particular network operator is able to control, to a certain extend, which network(s) their subscribers may use when they are roaming in the telecommunication network.

A particular network operator may prefer a particular network over another network for several reasons. One of the most prominent reasons is related to pricing agreements between the networks. The network operator may simply process differentiated pricings for its subscribers based on the visited network to which they are attached. Another reason is related to quality concerns. It may be the situation that a particular network is able to provide for better Quality of Service compared to another network.

Currently, steering of roaming may be based on two aspects, e.g. a network based steering or a Subscriber Identity Module, SIM, based approach, both of which are highlighted here below.

Network based steering utilizes particular functionality present in the home network of a subscriber. Whenever that particular subscriber attempts to attach to a visited network, e.g. a foreign network, the visited network will ask for permission from the home network. The home network may then decide whether the visited network is accepted or not. In case the visited network is not accepted, the home network may issue an error message or anything alike. Such an error message may accomplish that the subscriber selects a further network, and that the subscriber tries to attach to that further network. This process may continue until the home network has accepted a particular network and is thus considered as a sort of "trial and error" process.

Typically, the home network may reject attachments from a particular subscriber up to three times in an attempt to find a network that is acceptable. This avoids that the process takes too much time.

SIM based steering uses information that is present in the user terminal of a particular subscriber, e.g. the SIM. The SIM card may comprise a particular list of networks which the subscriber is allowed to use. The list may comprise the networks in a particular preferred order.

It may be required to regularly update and/or modify the list. This may be done using an over the air messaging system. Such a messaging system is known and is directed to various method of distributing new software, configuration settings, etc. to user terminals. Characteristic for such a messaging system is that a single central location, for example the home network, is able to send an update to all its subscribers, wherein the subscribers are unable to refuse or modify that update. This allows the home network to update and/or modify the networks present in the list.

The process of selecting, and using, a particular network as a visited network may, for both of the above elucidated cases, affect the user experience. For example, the process of selecting a particular network may be too time consuming and/or the result of the process may be that not the "best" network for the user terminal is selected.

### Summary

It is an objective to provide for methods to enable a user terminal to select a network to be used as a visited network in the telecommunication network.

It is another objective to provide for devices for enabling the user terminal to select a network to be used as a visited network in the telecommunication network.

In a first aspect, there is provided a method for a user terminal to select a network in a telecommunication network, wherein the user terminal is registered with a home network, wherein the method comprises the steps of:
detecting available networks thereby obtaining a listing of identifiers of available networks for the user terminal;
transmitting the listing of identifiers to the home network;
receiving, from the home network, at least one identifier present in the listing, thereby indicating the corresponding at least one network which the user terminal is allowed to use;
selecting a network based on the received at least one identifier.

The present disclosure is directed to the situation where the user terminal is about to roam in the telecommunication network. Roaming is a well known concept and refers to the situation in which a user terminal is outside the range of its home network and connects to another, available, network instead.

The presented method is especially useful in situations in which the user terminal has a plurality of networks available, wherein each of these networks may potentially be used as a visited network.

One of the advantages of the presented method is that the total time required for selecting a particular network is reduced. The home network is presented with the available networks for the user terminal, and provides the user terminal with those networks that the user terminal is allowed to use. As such, the amount of signalling messages between the user terminal and the home network is reduced, thereby improving the selection process.

In accordance with the present disclosure, a user terminal may be any of a smart phone, a tablet, a smart watch, Internet of Things based communication devices, self-driving cars, etc.

In accordance with the present disclosure, an identifier of a network could be a public land mobile network identification, PLMD ID. The PLMN ID is defined in telecommunications regulations and is considered a network that is established and operated by an administration or by a recognized operating agency for the purpose of providing land mobile telecommunication services to the public.

In an example, the step of transmitting the listing of identifiers of available networks may further comprise:
- transmitting the listing of identifiers of available networks along with Radio Access Technology, RAT, types and/or signal strength indicators for each of the plurality of available networks.

It is noted that, in accordance with the present disclosure, the home network may provide one or more identifications of networks to the user terminal, which networks the user terminal may use as a visited network for attaching to the telecommunication network.

As such, the home network may determine, based on the available networks for the user terminal, which of these available networks are also acceptable, e.g. allowed, to be used by the user terminal.

The home network could base such a decision on several factors. One of the factors is related to agreements that the home network operator may have made with each of the networks available for the user terminal.

Another option, or in addition thereto, could be that the home network bases such a decision on the Radio Access Technology, RAT, types of the available networks and/or the signal strength indicators for each of the available networks.

The user terminal may, for example, perform a plurality of signal strength measurements for each of the available networks. A couple of parameters already exist for such a signal strength indicator, for example the Received Signal Strength Indicator, RSSI, the Reference Signal Received Power, RSRP, and the Reference Signal Received Quality.

The RSSI is, for example, a measurement of the power present in a received radio signal. The RSRP is a measurement of the received power level in a Long Term Evolution, LTE, cell network. The average power is a measurement of the power received from a single reference signal.

The radio access technology, RAT, is the physical connection method for a radio based communication network, such as GERAN, UTRAN, EUTRAN, CDMA2000_1X, WLAN or 5G radio access.

In another example, the method may further comprise the step of:
- transmitting an attach request message to the selected network for attaching to the network.

The above described example may be used in situations in which the user terminal is currently not attached to any network. The user terminal may then use the method in accordance to the present disclosure to obtain a list of networks which the user terminal may use for connecting to the telecommunication network.

As such, the user terminal may contact the home network first to determine which of the available networks it may use for connecting to the telecommunication network.

The user terminal thus, initially, could detect available networks thereby obtaining a listing of identifiers of available networks for the user terminal. In accordance with the present disclosure, the user terminal may actively broadcast messages requesting the networks to respond thereto. As another option, the user terminal may listen to one or more broadcast channels, which broadcast channels are used by the networks for transmitting beacons.

Once the user terminal has found all available networks, it may send a pre-registration request towards its home network. The pre-registration request may be sent via any of the available networks, and the request may comprise the list of identifiers of available networks for the user terminal. In addition, the request may comprise the signal strength indicator and the RAT type for each of the available networks.

The network initially receiving the pre-registration request, for convenience sake called the visited network, may forward the pre-registration request to the home network.

The home network subsequently receives the pre-registration request. The home network may strike out one or more networks that are present on the listing. Such a process may be based on the user subscription information, based on different kinds of agreements made with the networks, quality requirements, or anything alike. The home network may also add networks and/or RAT types that are not present on the listing, but that are, for example preferred.

The home network could then send a pre-registration response back to the user terminal, wherein the pre-registration response may comprise the list of networks which the user terminal is allowed to use.

The pre-registration response may comprise a list of PLMN IDs of the allowable networks, including non-3GPP access methods, e.g. Wi-Fi, RAT types and/or relevant threshold information. The list may also contain the non-preferred, or non-allowed, PLMN ID's and an indication for the user terminal that these corresponding networks are not preferred, or non-allowed.

For example, the pre-registration response may comprise a list comprising a first priority PLMN ID #1, RAT=5G, a second priority PLMN ID #2, RAT=5G, a third priority PLMN ID #3, RAT=EUTRAN(LTE), etc.

The pre-registration response may, subsequently, be sent to the user terminal by the visited network. Upon receipt of the pre-registration response, the user terminal may select one network present in the response, for example the one with the highest priority and an acceptable signal strength level, and may transmit an attach request message to that selected network for attaching to the network.

The user terminal may, for example, choose the network for which it has the best signal strength, or the network with the highest priority in the list, or a combination thereof, or may base such a decision on other kinds of factors.

In a further example, the user terminal is attached to a visited network, and wherein the method may comprise the initial step of:
- receiving, from the home network via the visited network, a network query request for requesting the user terminal to provide the home network with the listing of identifiers of available networks for the user terminal.

The advantage of the above described example is that the home network may influence the choice for the visited network even when the user terminal has already attached thereto. The home network may request for an updated list of available networks, and may provide its response based thereon. As such, the home network may even "force" the user terminal to another network if it desires to do so.

In a further example, the step of transmitting the listing of identifiers to the home network may comprise:
- encrypting the identifiers in the listing in a network selection message, and transmitting the network selection message to the home network.

It was found by the inventors that the messages that are sent from the user terminal to the home network, or vice versa, in the method according to the present disclosure, may contain sensitive information. As such, it may be beneficial in case the data present in those messages are encrypted using, for example, public/private keys. This prevents the visited network from intercepting, and accessing, the data present in those messages.

As an alternative, or in addition thereto, a tunnel may be established between the user terminal and the home network and, once the tunnel has been established, the messages may be sent through that tunnel. This also mitigates the risk that any visited network intercepts and accesses the data present in the messages exchanged between the user terminal and the home network.

It is noted that, in accordance with the present disclosure, all messages between the user terminal and the home network might be encrypted such that the visited network is not able to view the contents of these messages.

In a second aspect of the present disclosure, there is provided a method for a node in a home network for enabling a user terminal to select a network in a telecommunication network, wherein the user terminal is registered with a home network.

The method may comprise the steps of:
- receiving, from the user terminal, a listing of identifiers of available networks for the user terminal;
- determining which of the available networks the user terminal is allowed to use, thereby obtaining at least one corresponding identifier;
- transmitting the at least one corresponding identifier to the user terminal thereby enabling the user terminal to select a network.

The expressions, i.e. the wording, of the different aspects comprised by the method and devices according to the present disclosure should not be taken literally. The wording of the aspects is merely chosen to accurately express the rationale behind the actual functioning of the aspects.

In accordance with the present disclosure, different aspects applicable to the above mentioned examples of the methods in a first aspect of the invention, including the advantages thereof, correspond to the aspects which are applicable to methods of the second aspect of the invention.

The above described second aspect of the present disclosure is directed to the activities performed by the home network. As such, the home network receives, from a user terminal, a listing of identifiers of available networks for that user terminal. The home network subsequently determines which of the available networks the user terminal is allowed to use, and transmits the corresponding identifiers back to the user terminal. This enables the user terminal to select a network.

In an example, the step of receiving may further comprise:
- receiving the listing of identifiers of available networks for the user terminal along with Radio Access Technology, RAT, types and/or signal strength indicators for each of the plurality of available networks.

The advantage of this example is that the home network may use this information for determining which networks the user terminal is allowed to use as visited network. That is, the home network may determine which of the available networks the user terminal is allowed to use based on the received RAT types and/or signal strength indicators for each of the plurality of available networks.

In an example, the user is attached to a visited network, and wherein the method may further comprise the step of:
- transmitting to the user terminal via the visited network a network query request for requesting the user terminal to provide the home network with the listing of identifiers of available networks for the user terminal.

In a further example, the step of receiving the listing of identifiers of available networks to the home network may comprise:
- receiving the listing of identifiers of available networks in an encrypted network selection message.

In a third aspect, there is provided a user terminal arranged for selecting a network in a telecommunication network, wherein the user terminal is registered with a home network, wherein the user terminal may comprise:
- a receiver;
- a transmitter;
- at least one processor configured to:
   detect available networks thereby obtaining a listing of identifiers of available networks for the user terminal;
   use the transmitter to transmit the listing of identifiers to the home network;
   use the receiver to receive, from the home network, at least one identifier present in the listing, thereby indicating the corresponding at least one network which the user terminal is allowed to use;
   select a network based on the received at least one identifier.

In a fourth aspect, there is provided a network node arranged to operate in a home network to which a user terminal is registered with, the network node arranged to enable a user terminal to select a network in a telecommunication network, wherein the network node may comprise:
- a receiver;
- a transmitter;
- at least one processor configured to:
   use the receiver for receiving, from the user terminal, a listing of identifiers of available networks for the user terminal;
   determine which of the available networks the user terminal is allowed to use, thereby obtaining at least one corresponding identifier;
   use the transmitter for transmitting the at least one corresponding identifier to the user terminal thereby enabling the user terminal to select a network.

In an example the node is any of
- a Home Subscriber Server, HSS, node;
- a Home Location Register, HLR, node;
- a Unified Data Management, UDM, node.

It is further noted that the functionality provided by the node in accordance with the present disclosure may also be regarded as a network function like one of the network functions as known in 5G technology.

In a further aspect, there is provided a method of selecting a network for a user terminal in a telecommunication network, wherein the user terminal is registered with a home network, wherein the method may comprise the steps of:
- detecting available networks, thereby obtaining a listing of identifiers of available networks for the user terminal;
- transmitting the listing of identifiers to the home network;
- determining which of the available networks the user terminal is allowed to use, thereby obtaining at least one corresponding identifier
- receiving, from the home network, at least one identifier present in the listing, thereby indicating the corresponding at least one network which the user terminal is allowed to use;
- selecting a network based on the received at least one identifier.

The above-mentioned and other features and advantages of the disclosure will be best understood from the following description referring to the attached drawings. In the drawings, like reference numerals denote identical parts or parts performing an identical or comparable function or operation.

### Brief description of the figures

Figure 1 discloses a first example of the presented method wherein the user terminal performs a pre-registration procedure;
Figure 2 discloses a second example of the presented method wherein the home network requests an update from the user terminal;
Figure 3 discloses a third example of the presented method wherein the user terminal initiates the sending of an updated list of available networks to the home network.

### Detailed description of the figures

It is noted that aspects that have the same, or similar, meaning across the figures have been referenced with the same reference numeral to increase the readability.

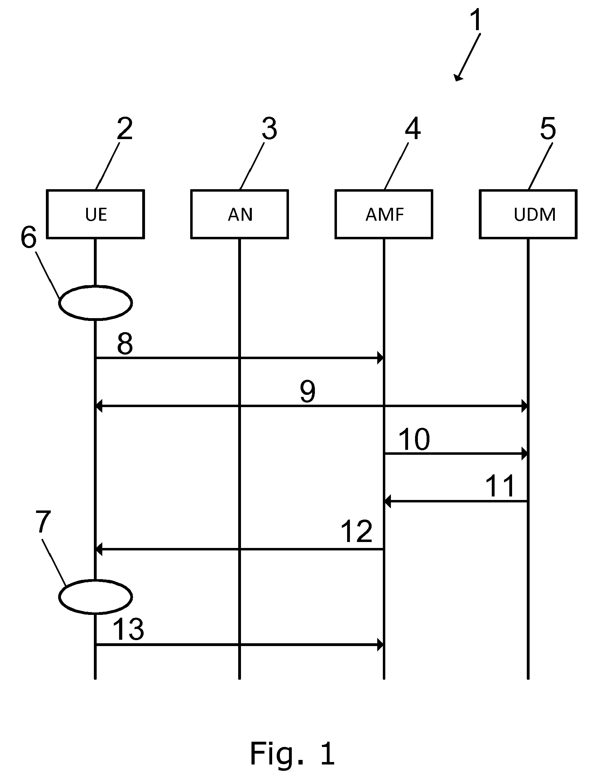

Figure 1 discloses a first example 1 of the presented method wherein the user terminal 2 performs a pre-registration procedure.

Here, the visited network is indicated by the nodes or functions having reference numerals 3 and 4. Reference numeral 3 is the access node, for example a gNodeB. The home network for the user terminal 2 is indicated by the node or function having reference numeral 5, which is the Unified Data Management.

The method shown in figure 1 may be used in situations wherein the user terminal 2 is not yet attached to any network. Further, the user terminal 2 may be out of reach for the home network or for the visited network to which the user terminal 2 is currently connected, such that the user terminal 2 needs to connect to a visited network. As such, the user terminal 2 is roaming in the telecommunication network.

The user terminal 2 may be any type of device suitable for mobile communication such as a smart phone, tablet, etc. In a specific embodiment, the user terminal 2 is embedded in a vehicle, wherein the user terminal 2 performs all kinds of vehicle to vehicle communication.

In a first step 6 according to the presented method, the user terminal will determine the networks that are available for the user terminal 2. That is, the networks that the user terminal 2 can use for obtaining mobile connectivity. In the present scenario, the user terminal 2 is not able to directly connect to its home network, i.e. the network with which the user terminal 2 is registered.

The user terminal 2 may, for example, listen to broadcast channels to detect any beacons sent by the access nodes of different networks. The beacons may comprise identifiers of the networks, for example public land mobile network identifications, or anything alike. As an alternative, or in addition thereto, the user terminal 2 may actively broadcast discovery messages for discovering the networks that are available for the user terminal 2.

A listing may subsequently be construed comprising each of the identifiers of the networks. The user terminal 2 may also add additional information like signal strength indicators, Radio Access Technologies, RAT's, etc.

The listing of identifiers of available networks, along with the addition information, is subsequently sent 8, in a pre-registration message, towards the home network 5, which is, in the present scenario, the Unified Data Management 5. The pre-registration message may be sent via any of the available networks for the user terminal 2.

Typically, the pre-registration message is received by the access node 3 and is forward towards the Access and Mobility Function 4. The Access and Mobility Function 3 then forwards 10 the pre-registration message towards the home network 5.

It is noted that the content of the pre-registration message may be encrypted using asymmetric cryptography, for example, public and private keys. Another option is that initially a tunnel is established between the user terminal 2 and a particular (trusted) node in the home network, wherein that particular tunnel is used for conveying the pre-registration message. The above accomplishes that the visited network, i.e. the network that is used for conveying the pre-registration message to the home network, is not able to ease drop.

An authentication and security step 9 may, additionally, be initiated to determine whether the user terminal 2 is actually registered with the home network.

The Unified Data Management 5 will then determine which of the available networks the user terminal is allowed to use, thereby obtaining at least one corresponding identifier. The Unified Data Management 5 may use different kinds of input to arrive at such a decision, such as pricing agreements with the networks, security aspects of the networks, quality of service aspects of the networks, etc.

What is obtained is at least one identifier of a network which the user terminal 2 is allowed to use. Typically, a plurality of identifiers are obtained. The at least one identifier is transmitted 11 towards the user terminal 2 in a pre-registration response message. The pre-registration response message is received by the access and mobility function 4 and is subsequently forwarded 12 to the user terminal via the access node 3.

The content of the pre-registration message may also be encrypted using any means as explained above or may be conveyed via a tunnel established between the home network and the user terminal 2.

In a subsequent step 7, the user terminal may select a network based on the at least one identifier present in the pre-registration response, and may use that selected network for transmitting 13 an attach request message.

The present disclosure may be applicable for different types of telecommunication network, like the fourth Generation, 4G, telecommunication network and the fifth Generation, 5G, telecommunication network. For example, in some parts of the present disclosure there is referred to the evolved node B, eNB, which is known in 4G telecommunication networks as the access node for a UE. A same reasoning may be valid for the gNodeB "next Generation Node B, gNB", in 5G telecommunication networks. Similarly, the Mobility Management Function may be referred to as a Mobility Management Entity, MME, in 4G telecommunication networks and/or an Access and Mobility Management Function, AMF, in 5G telecommunication networks. Further, the Packet gateway, P-GW and Serving gateway, S-GW, in 4G telecommunication networks may be referred to as User Plane Function, UPF, in 5G telecommunication networks.

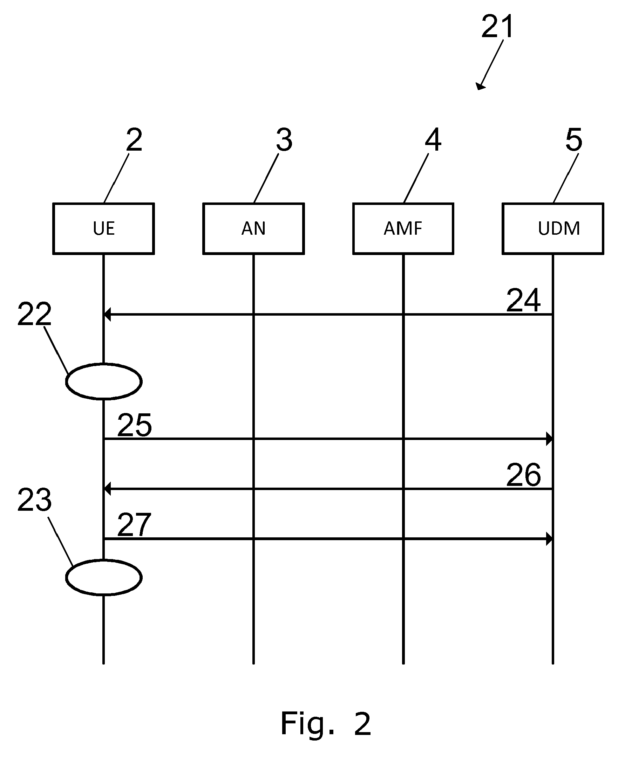

Figure 2 discloses a second example 21 of the presented method wherein the home network requests an update from the user terminal.

It is noted that the aspects that are the same, or similar, are referenced to with the same reference numeral for increasing the readability.

In the present depicted scenario, the user terminal 2 is already attached to the telecommunication network via a particular visited network. The visited network is indicated by the nodes or functions having reference numerals 3 and 4.

The home network may request an update of the available networks for the user terminal 2 at any moment in time. Such a request may, for example, be sent by the home network if the present utilized visited network is not the preferred one, or is not able to provide certain quality of service levels, etc.

As such, the home network 5 may sent 24 a network query request for requesting the user terminal 2 to provide the home network 5 with the listing of identifiers of available networks for the user terminal 2.

That particular message forms a trigger for the user terminal to determine, detect, or scan 22 for the available networks, i.e. the networks it can use for obtaining mobile connectivity.

The user terminal 2 may, for example, send a network query response message via the current visited network comprising the list of available networks along with their corresponding signal strength to the home network 5. The home network 5 may then send 26 an update network selection request message with an updated network selection list, e.g. a list comprising the identifiers of the networks that the user terminal 2 are allowed to use. The user terminal 2 may subsequently select 23 a particular network comprised by the network selection list and may send 27 an update network selection response message back to the home network 5 for informing the home network about the selection.

The selection may, for example, be related to a network reselection or handover to a different network. For example, if a more preferred network is available, the user terminal 2 may decide to be attached to that particular network. Another option is that the current visited network is selected. That is, the user terminal 2 decides that the visited network that is currently utilized is still the best available network to be used.

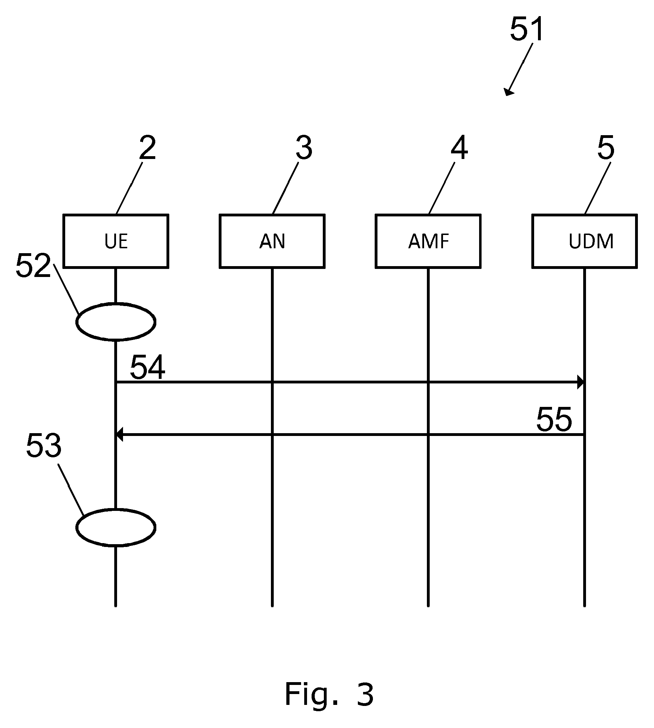

Figure 3 discloses a third example 51 of the presented method wherein the user terminal 2 initiates the sending of an updated list of available networks, e.g. the identifiers of the available networks, to the home network.

In the present scenario it is assumed that the user terminal 2 is already connected to the telecommunication network utilizing a particular visited network.

For any particular reason, the user terminal 2 may decide to request the home network for an updated list of allowable networks based on the networks that are available for the user terminal 2. For example, the user terminal 2 may perceive a lack of quality, a lack of reliability, a lack of reliability and it detects a network with better signal that is not in the current network selection list, or anything alike for the presently utilized visited network, and may check whether any of the other available network are also allowed by the home network to increase its user experience.

As such, the user terminal determines 52 the available networks that is can use as visited networks, sends 54 the list of available networks, for example in a network selection request message, to the home network 5, and receives 55 the subset of the list of available networks, for example in a network selection response message, back from the home network 5. The user terminal may, subsequently, select 53 the currently utilized visited network among the subset of networks or may choose to connect to a further network among the subset.

One of the advantages of the present disclosure is that the home network and/or the user terminal has more influence on the decision about which visited network the user terminal is to use.

Further, the presented method has the advantage that there is more flexibility in updating procedures. That is, the home network may initiate a request to the user terminal for providing the home network with an updated list of available networks which the user terminal can use for obtaining mobile connectivity. Such a request may also be initiated from the user terminal.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope thereof.

## Claims

1. A method for a user terminal to select a network in a telecommunication network, wherein the user terminal is registered with a home network, wherein the method comprises the steps of:
- detecting available networks thereby obtaining a listing of identifiers of available networks for the user terminal;
- transmitting the listing of identifiers to the home network;
- receiving, from the home network, at least one identifier present in the listing, thereby indicating the corresponding at least one network which the user terminal is allowed to use;
- selecting a network based on the received at least one identifier.

2. A method in accordance with claim 1, wherein the step of transmitting the listing of identifiers of available networks further comprises:
- transmitting the listing identifiers of available networks along with Radio Access Technology, RAT, types and/or signal strength indicators for each of the plurality of available networks.

3. A method in accordance with any of the previous claims, wherein the method further comprises the step of:
- transmitting an attach request message to the selected network for attaching to the network.

4. A method in accordance with any of the previous claims, wherein the user terminal is attached to a visited network, and wherein the method comprises the initial step of:
- receiving, from the home network via the visited network, a network query request for requesting the user terminal to provide the home network with the listing of identifiers of available networks for the user terminal.

5. A method in accordance with any of the previous claims, wherein the step of transmitting the listing of identifiers to the home network comprises:
- encrypting the identifiers in the listing in a network selection message, and transmitting the network selection message to the home network.

6. A method for a node in a home network for enabling a user terminal to select a network in a telecommunication network, wherein the user terminal is registered with a home network, wherein the method comprises the steps of:
- receiving, from the user terminal, a listing of identifiers of available networks for the user terminal;
- determining which of the available networks the user terminal is allowed to use, thereby obtaining at least one corresponding identifier;
- transmitting the at least one corresponding identifier to the user terminal thereby enabling the user terminal to select a network.

7. A method in accordance with claim 6, wherein the step of receiving further comprises:
- receiving the listing of identifiers of available networks for the user terminal along with Radio Access Technology, RAT, types and/or signal strength indicators for each of the plurality of available networks.

8. A method in accordance with claim 7, wherein the step of determining comprises:
- determining which of the available networks the user terminal is allowed to use based on the received RAT types and/or signal strength indicators for each of the plurality of available networks.

9. A method in accordance with any of the claims 6 - 8, wherein the user terminal is attached to a visited network, and wherein the method further comprises the step of:
- transmitting to the user terminal via the visited network a network query request for requesting the user terminal to provide the home network with the listing of identifiers of available networks for the user terminal.

10. A method in accordance with any of the claims 6 - 9, wherein the step of receiving the listing of identifiers of available networks to the home network comprises:
- receiving the listing of identifiers of available networks in an encrypted network selection message.

11. A user terminal arranged for selecting a network in a telecommunication network, wherein the user terminal is registered with a home network, wherein the user terminal comprises:
- a receiver;
- a transmitter;
- at least one processor configured to:
detect available networks thereby obtaining a listing of identifiers of available networks for the user terminal;
use the transmitter to transmit the listing of identifiers to the home network;
use the receiver to receive, from the home network, at least one identifier present in the listing, thereby indicating the corresponding at least one network which the user terminal is allowed to use;
select a network based on the received at least one identifier.

12. A network node arranged to operate in a home network to which a user terminal is registered with, the network node arranged to enable a user terminal to select a network in a telecommunication network, wherein the network node comprises:
- a receiver;
- a transmitter;
- at least one processor configured to:
use the receiver for receiving, from the user terminal, a listing of identifiers of available networks for the user terminal;
determine which of the available networks the user terminal is allowed to use, thereby obtaining at least one corresponding identifier;
use the transmitter for transmitting the at least one corresponding identifier to the user terminal thereby enabling the user terminal to select a network.

13. A network node in accordance with claim 12, wherein the node is any of:
- a Home Subscriber Server, HSS, node;
- a Home Location Register, HLR, node;
- a Unified Data Management, UDM, node;
- a network function in a telecommunication network.

14. A network function for operation in a telecommunication network, wherein said network function is arranged to carry out the method according to any of the claims 1 - 10.

15. A method of selecting a network for a user terminal in a telecommunication network, wherein the user terminal is registered with a home network, wherein the method comprises the steps of:
- detecting available networks, thereby obtaining a listing of identifiers of available networks for the user terminal;
- transmitting the listing of identifiers to the home network;
- determining which of the available networks the user terminal is allowed to use, thereby obtaining at least one corresponding identifier
- receiving, from the home network, at least one identifier present in the listing, thereby indicating the corresponding at least one network which the user terminal is allowed to use;
- selecting a network based on the received at least one identifier.
